# EUROPÄISCHE PATENTSCHRIFT

(11) **EP 2 897 887 B1**
(45) Veröffentlichungstag und Bekanntmachung des Hinweises auf die Patenterteilung: **13.07.2016**
(21) Anmeldenummer: 13760043.3
(22) Anmeldetag: 10.09.2013
(51) Int. Cl.: B65G 39/09

(54) **FÖRDERROLLE MIT KOPFELEMENT**
CONVEYING ROLLER HAVING A HEAD ELEMENT
ROULEAU DE TRANSPORT MUNI D'UN ÉLÉMENT DE RACCORDEMENT

(30) Priorität: 18.09.2012 DE 202012008919 U
(43) Veröffentlichungstag der Anmeldung: 29.07.2015
(73) Patentinhaber: Interroll Holding AG, 6592 Sant' Antonino (CH)
(72) Erfinder: LINDEMANN, Harry, 42929 Wermelskirchen (DE)
(74) Vertreter: Eisenführ Speiser
(86) Internationale Anmeldenummer: PCT/EP2013/068686
(87) Internationale Veröffentlichungsnummer: WO 2014/044573

(56) Entgegenhaltungen:
- WO-A1-2005/019070
- DE-A1- 3 211 952
- DE-B- 1 247 941
- DE-C1- 3 842 905
- DE-U- 1 779 772
- US-A- 3 994 380
- US-A1- 2009 188 777
- US-A1- 2011 062 000

## Beschreibung

Die Erfindung betrifft eine Förderrolle für Förderanlagen zum Fördern von Behältern, Paletten und dergleichen, umfassend einen Rollenkörper mit einer Rollenachse, dessen Außenumfangsfläche eine Auflagefläche für Fördergut darstellt, und ein Kopfelement, das mit einem Einführabschnitt in ein hohles Ende des Rollenkörpers eingeführt ist.

Die Erfindung betrifft ferner ein Verfahren zur Herstellung einer solchen Förderrolle.

Förderrollen dieser Bauart werden für unterschiedliche Zwecke in logistischen Anwendungen eingesetzt. So können sie beispielsweise in der Palettenförderung, bei der Förderung von Paketen in Paketversandzentren, zur Förderung von Behältern in Lagern unterschiedlicher Art oder zum Gepäcktransport in Flughäfen und in zahlreichen anderen Anwendungen eingesetzt werden. Dabei wird regelmäßig eine Förderstrecke aufgebaut, die aus mehreren nebeneinander angeordneten Rollen besteht, deren obere Umfangsfläche jeweils zur Aufnahme des Fördergutes dient. In diesen Förderstrecken sind einerseits Leerlaufrollen angeordnet, die antriebslos sind und lediglich in einem Fördergestell drehbar gelagert sind. Ferner sind in diesen Förderstrecken angetriebene Förderrollen angeordnet, die motorbetrieben sind und durch eine elektrische Antriebseinheit in Rotation versetzt werden. Die motorbetriebenen Förderrollen dienen einerseits dazu, unmittelbar über die äußere Umfangsfläche ihres Rollenkörpers das Fördergut zu transportieren.

Andererseits kann mittels einer Übertragung der Rotation der motorbetriebenen Förderrolle auf eine oder mehrere Leerlaufrollen mittels eines Übertragungselementes, beispielsweise eines Riemenantriebs, durch die motorbetriebene Förderrolle auch eine oder mehrere Leerlaufrollen in Rotation versetzt werden, um auch über deren äußere Umfangsflächen das Fördergut anzutreiben.

Förderrollen sind vorzugsweise solcherart aufgebaut, dass der Rollenkörper zumindest abschnittsweise hohl ausgebildet ist und insbesondere ein hohles Ende, vorzugsweise zwei hohle Enden aufweist. Bei motorbetriebenen Förderrollen ist die Antriebseinheit vorzugsweise innerhalb eines Innenraums des Rollenkörpers angeordnet. Wenn die Antriebseinheit innerhalb des Rollenkörpers angeordnet ist, sind keine außerhalb des Rollenkörpers angeordneten mechanischen Komponenten erforderlich, um die Rotation der Rolle zu erzeugen. Eine im Innenraum des Rollenkörpers angeordnete Antriebseinheit kann beispielsweise eine Kupplungseinheit aufweisen, die ausgebildet und angeordnet ist, ein Drehmoment von der Antriebseinheit auf eine Innenumfangsfläche des Innenraums des Rollenkörpers zu übertragen.

Aus der EP 1 671 901 B1 ist eine Förderrolle bekannt, bei der ein als Buchse ausgebildetes Kopfelement in ein hohles Ende des Rollenkörpers eingesteckt und damit starr verbunden ist. Das als Buchse ausgebildete Kopfelement der EP 1 671 901 B1 nimmt ein Lager auf, das an einem Zapfen eines Gestells drehbar gelagert ist. Auf diese Weise kann das Ende des Rollenkörpers einfach drehbar gegenüber einem Gestell gelagert werden. Damit das Kopfelement zumindest abschnittsweise, nämlich mit seinem Einführabschnitt, in das hohle Ende des Rollenkörpers eingeführt werden kann, ist vorzugsweise der Querschnitt des Einführabschnitts in einer Ebene orthogonal zur Rollenachse an den Querschnitt des hohlen Endes des Rollenkörpers, ebenfalls in einer Ebene orthogonal zur Rollenachse, angepasst.

Die DE 1779772 U beschreibt eine gattungsgemäße Förderrolle.

Solche existierenden Förderrollen sind einfach herzustellen und zu montieren. Es ist jedoch wünschenswert, existierende Förderrollen weiter zu verbessern und deren Zuverlässigkeit weiter zu erhöhen.

Es ist daher eine Aufgabe der vorliegenden Erfindung, eine Förderrolle der eingangs genannten Art bereitzustellen bzw. herzustellen, die einen oder mehrere der genannten Bedarfe zumindest teilweise befriedigt.

Diese Aufgabe wird erfindungsgemäß gelöst durch eine Förderrolle gemäß Anspruch 1.

Der Erfindung liegt die Erkenntnis zugrunde, dass die Übertragung der Rotation von einer Rolle zur anderen, insbesondere von einer motorbetriebenen Förderrolle auf eine oder mehrere Leerlaufrollen, durch das Vorsehen eines Halteelements am Einführabschnitt, das mit diesem in das hohle Ende des Rollenkörpers eingeführt ist, erheblich verbessert werden kann. Damit kann zum einen die Zuverlässigkeit von Förderrollen, sowohl motorbetriebenen Förderrollen als auch von Leerlaufrollen, verbessert werden und ferner auch die Präzision der Förderung von Fördergut, insbesondere bzgl. des Startens und Stoppens, erhöht werden.

Unter einer radialen Richtung ist eine zur Rollenachse orthogonale Richtung zu verstehen. Das Halteelement weist also in einer bestimmten, zur Rollenachse orthogonalen bzw. in einer auf die Rollenachse bezogen radialen Richtung einen Abstand zur Rollenachse auf, der größer als der Abstand zwischen einem Punkt am Innenumfang des hohlen Endes des Rollenkörpers in der gleichen radialen Richtung, d.h. ein einer bestimmten radialen Richtung ragt das Halteelement weiter von der Rollenachse weg als der Innenumfang des hohlen Endes des Rollenkörpers.

Beispielsweise kann die bestimmte radiale Richtung bei einer still stehenden Förderrolle in Einbaulage eine Richtung von der Rollenachse aus senkrecht nach oben sein. Erfin-, dungsgemäß liegt dann in dieser von der Rollenachse senkrecht nach oben weisenden Richtung ein Punkt auf dem Außenumfang des Halteelements weiter von der Rollenachse entfernt als ein Punkt am Innenumfang des hohlen Endes des Rollenkörpers. Dies kann beispielsweise bedeuten, dass ein Kreis, der einen Querschnitt orthogonal zur Rollenachse des Halteelements umschreibt, größer ist als der Innenquerschnitt des hohlen Endes eines hohlzylinderförmigen Rollenkörpers.

Das Halteelement kann vorzugsweise auch in einer bestimmten radialen Richtung einen Durchmesser aufweisen, der größer ist als der lichte Durchmesser des hohlen Endes des Rollenkörpers in dergleichen radialen Richtung.

Erfindungsgemäß muss also beim Einführen des Einführabschnitts des Kopfelements mit dem Halteelement in das hohle Ende des Rollenkörpers eine Anpassung zwischen Halteelement und Ende des Rollenkörpers erfolgen, beispielsweise indem sich der Teil des Halteelements mit der größeren Ausdehnung in die Innenwandung des hohlen Endes des Rollenkörpers eingräbt. Auf diese Weise entsteht eine deutlich verbesserte Verbindung zwischen dem Kopfelement und dem Rollenkörper, die verhindert, dass eine relative Rotationsbewegung des Kopfelements gegenüber dem Rollenkörper auftritt.

Bevorzugt ist, dass das Kopfelement einen inneren Hohlraum aufweist, der insbesondere ausgebildet ist, um Lagerelemente aufzunehmen, über die die Förderrolle an einem Gestell gelagert werden kann. Insbesondere ist der innere Hohlraum zur Aufnahme eines Wälzlagers für die Lagerung eines Lagerzapfens ausgebildet. Der Lagerzapfen kann beispielsweise gebildet werden durch eine mit einem Innengewinde versehene Hülse, die am Innenring des Wälzlagers gelagert ist, und eine Schraube, welche in dieses Innengewinde eingeschraubt werden kann.

Die erfindungsgemäße Förderrolle kann als Leerlaufrolle oder als motorbetriebene Förderrolle ausgebildet sein. In einer Ausgestaltung als motorbetriebene Förderrolle ist die Förderrolle gekennzeichnet durch eine Antriebseinheit, die ausgebildet und angeordnet ist, ein Drehmoment auf den Rollenkörper zu übertragen.

Besonders bevorzugt ist es, dass der Einführabschnitt und das Ende des Rollenkörpers jeweils einen zylindrischen Querschnitt aufweisen. Als Querschnitt wird hier ein Schnitt in einer Ebene orthogonal zur Rollenachse verstanden. Insbesondere wenn der Einführabschnitt des Kopfelements einen kreisförmigen Querschnitt hat und auch das hohle Ende des Rollenkörpers einen kreisförmigen Hohlquerschnitt aufweist, ist die Anordnung eines zuvor beschriebenen Halteelements besonders bevorzugt, da zwischen der zylindrischen Außenoberfläche des Einführabschnitts und der zylindrischen Innenfläche des hohlen Endes des Rollenkörpers kein Formschluss auftritt, sondern lediglich ein Reibschluss. Das Halteelement verhindert in vorteilhafter Weise auch bei Verminderung oder Versagen des Reibschlusses zwischen zylindrischer Außenoberfläche des Einführabschnitts und zylindrischer Innenfläche des hohlen Endes des Rollenkörpers ein Durchrutschen oder ein Spiel des Kopfelements gegenüber dem Rollenkörper.

Ferner ist insbesondere bevorzugt, dass das Kopfelement einen Übertragungsabschnitt zum Übertragen eines Drehmoments an ein Übertragungselement aufweist.

Die Vorteile der Erfindung kommen insbesondere zum Tragen, wenn über das Kopfelement die Rotation des Rollenkörpers an eine oder mehrere weitere Rollen übertragen werden soll. Dazu weist das Kopfelement vorzugsweise einen Übertragungsabschnitt auf, der nicht in den Rollenkörper eingeführt wird, sondern in axialer Richtung über den Rollenkörper hinausragt. An diesem Übertragungsabschnitt kann beispielsweise ein Riemenantrieb angeordnet sein, der in Förderrichtung und/oder entgegengesetzt dazu beispielsweise eine motorbetriebene Förderrolle mit direkt oder indirekt benachbarten Leerlaufrollen verbindet.

Bevorzugt ist insbesondere, dass der Übertragungsabschnitt außenumfänglich wenigstens ein W-förmiges Umfangsprofil aufweist, um das ein Poly-V-Riemen gelegt werden kann. Insbesondere bevorzugt ist die Ausbildung eines Umfangsprofils mit einer Doppel-W-Form, um zwei Poly-V-Riemen aufnehmen zu können oder die Ausbildung eines Mehrfach-V-Umfangsprofils, um einen oder mehrere Poly-V-Riemen aufnehmen zu können.

Solche Poly-V-Riemen sind beispielsweise von der Firma Hutchinson verfügbar. Anstelle eines W-Profils kann auch ein Mehrfach-V-Profil am Außenumfang des Übertragungsabschnitts ausgebildet sein, um Poly-V-Riemen mit mehr als zwei V-förmigen Innenkeilen aufnehmen zu können. Die Poly-V-Riemen besitzen gegenüber herkömmlichen Riemen eine vergrößerte Anlagefläche. Hierdurch lassen sich höhere Drehmomente übertragen. Die Übertragung höherer Drehmomente fördert jedoch das Versagen des Reibschlusses zwischen Kopfelement und Rollenkörper. Um eine höhere Drehmomentübertragung zuverlässig zu realisieren ist es daher erforderlich, eine drehmomentsteife Verbindung zwischen Kopfelement und hohlem Ende der Förderrolle für entsprechend hohe Drehmomente sicherzustellen, was durch das Vorsehen des Halteelements erfolgt.

In einer bevorzugten Ausführungsform ist das Halteelement scheibenförmig ausgebildet. Unter einer scheibenförmigen Ausbildung wird eine Form des Halteelements verstanden, die in Richtung der Rollenachse, d.h. axial, eine deutlich geringere Ausdehnung aufweist als orthogonal zur Rollenachse, d.h. in radialer Richtung.

Ferner ist es bevorzugt, dass das Halteelement sternförmig ausgebildet ist. Unter einer sternförmigen Ausbildung des Halteelements ist insbesondere eine Ausbildung zu verstehen, bei der das Halteelement in einem Querschnitt orthogonal zur Rollenachse radial nach außen gerichtete Spitzen aufweist. Die Spitzen sind vorzugsweise gleichmäßig über den Umfang des Halteelements verteilt.

Die Spitzen können einander radial gegenüberliegend oder versetzt zueinander angeordnet sein. Bei einer radial gegenüberliegenden Anordnung der Spitzen ist im Bereich der Spitzen der Durchmesser des Halteelements größer als ein lichter Durchmesser des hohlen Endes des Rollenkörpers. Bei einer versetzten Anordnung der Spitzen ist der Radius des Halteelements im Bereich der Spitzen, also der Abstand eines Außenumfangs zur Rollenachse, größer als ein Radius des hohlen Endes des Rollenkörpers, also ein Abstand zwischen der Rollenachse und einem Punkt am Innenumfang des hohlen Endes des Rollenkörpers.

Zwischen den Spitzen sind vorzugsweise abgeflachte Abschnitte angeordnet, die einen geringeren radialen Abstand zur Rollenachse aufweisen als die Spitzen. Die Übergänge zwischen den abgeflachten Abschnitten und den jeweils angrenzenden Spitzen können vorzugsweise mit konkaven Rundungen versehen sein. Das Halteelement kann vollflächig oder mit einer inneren, vorzugsweise kreisförmigen, Ausnehmung ausgebildet sein. Eine solche Ausgestaltung des Halteelements hat den Vorteil, dass einerseits mehrere Spitzen zur Herstellung der drehmomentsteifen Verbindung zwischen Kopfelemente und Rollenkörper vorgesehen sind, wobei gleichzeitig Material - und damit Gewicht und Kosten - des Halteelements eingespart werden kann.

Besonders bevorzugt ist es, dass das Halteelement ein erstes Material aufweist oder daraus besteht und der Rollenkörper ein zweites Material aufweist oder daraus besteht und das erste Material härter ist als das zweite Material.

Wenn das Halteelement, insbesondere die Teile des Halteelements, die die Umfangsspitzen bilden, härter sind als der Rollenkörper, wird sich das Halteelement bzw. seine Umfangsspitzen beim Einführen des Einführungsabschnitts des Kopfelements in das hohle Ende des Rollenkörpers in die Innenfläche des Rollenkörpers eingraben. Dadurch entsteht eine besonders zuverlässige drehmomentsteife Verbindung zwischen Kopfelement und Rollenkörper, die eine Relativbewegung zwischen Kopfelement und Rollenkörper verhindert. Besonders bevorzugt ist eine Ausbildung des Halteelements aus Metall.

Das Kopfelement und das Halteelement können einstückig und aus dem gleichen Material ausgebildet sein. Insbesondere ist es jedoch bevorzugt, dass das Kopfelement ein drittes Material aufweist oder daraus besteht und das erste Material härter ist als das dritte Material. Das Kopfelement besteht somit aus einem anderen Material als das Halteelement oder weist zumindest ein anderes Material auf. Dadurch wird es möglich, das Kopfelement aus einem weicheren und/oder kostengünstigeren Material als das Halteelement auszubilden, beispielsweise um Gewicht und/oder Kosten gegenüber einer Ausführung des Kopfelements aus dem gleichen Material wie dem Halteelement einzusparen.

Das Kopfelement wird vorzugsweise aus einem Kunststoff hergestellt, insbesondere eine steifen Kunststoff wie Polyamid oder vergleichbaren Kunststoffen. Das Kopfelement ist vorzugsweise nicht mit Füllstoffen wie Fasern, Partikeln oder dergleichen gefüllt oder verstärkt, um ein günstiges Verschleißverhalten in der Paarung zu den darauf laufenden Antriebsriemen zu erreichen. Das Haltelement kann demgegenüber aus einem Material ausgebildet sein, welches eine höhere Härte als das Kopfelement aufweist, insbesondere kann das Halteelement aus einem metallischen Werkstoff wie Stahl, insbesondere einem Federstahl, hergestellt sein.

Erfindungsgemäß weist der Einführabschnitt über seinen Umfang verteilte Schlitze auf und das Halteelement weist Umfangsspitzen auf, die durch die Schlitze radial nach außen ragen. Die Schlitze sind vorzugsweise über den Umfang des Einführabschnitts gleichmäßig verteilt und erstrecken sich weiterhin vorzugsweise parallel zur Rollenachse. Besonders bevorzugt ist ferner, dass sich die Schlitze von einem Ende des Einführabschnitts in Richtung des Übertragungsabschnitts erstrecken und im Einführabschnitt enden.

Diese Ausführungsform hat den Vorteil, dass das Halteelement leicht vom Ende des Einführabschnitts her so auf das Kopfelement aufgeschoben werden kann, dass die Umfangsspitzen an den Schlitzen ausgerichtet sind und das Halteelement am Einführabschnitt angeordnet ist, da es nur so weit in das Kopfelement eingeschoben werden kann, wie die Schlitze reichen. Das Ende der Schlitze stellt somit einen Anschlag für das Halteelement dar, was sich insbesondere beim Einführen des Einführabschnitts in das Ende des Rollenkörpers als vorteilhaft erweist.

Dabei ist es insbesondere bevorzugt, dass sich die Schlitze zum Übertragungsabschnitt hin verjüngen. Auf diese Weise sind die Schlitze am Ende des Eihführabschnitts breiter, sodass die Einführung der Umfangsspitzen des Halteelements in die Schlitze erleichtert wird und am Ende der Schlitze diese sich soweit verjüngen, dass eine Rotation des Halteelements gegenüber dem Kopfelement um die Rollenachse verhindert wird.

In einer weiteren bevorzugten Ausführungsform verjüngt sich der Einführabschnitt an seinem dem Übertragungsabschnitt zugewandten Ende hin. Dabei ist insbesondere bevorzugt, dass das Ende des Rollenkörpers im Bereich des verjüngten Endes des Einführabschnitts eine Bördelung aufweist.

In dieser Ausführungsform wird die drehmomentsteife Verbindung zwischen Kopfelement und Rollenkörper ferner dadurch verbessert, dass das äußere Ende des Rollenkörpers um den verjüngten Teil des Einführabschnitts nach dem Einführen des Einführabschnitts in das Ende des Rollenkörpers umgebördelt wird.

Gemäß einem weiteren Aspekt der Erfindung wird die eingangs genannte Aufgabe gelöst durch ein Verfahren nach Anspruch 14.

Zu den Vorteilen, Ausführungsvarianten und Ausführungsdetails des erfindungsgemäßen Verfahrens und seiner Fortbildungen wird auf die vorangegangene Beschreibung zu den entsprechenden Vorrichtungsmerkmalen verwiesen.

Eine bevorzugte Ausführungsform der Erfindung wird beispielhaft anhand der beiliegenden Figuren beschrieben. Es zeigen:
- Fig. 1:: eine Draufsicht auf ein Kopfelement für eine erfindungsgemäße Förderrolle;
- Fig. 2:: eine Seitenansicht des in Fig. 1 dargestellten Kopfelements;
- Fig. 3:: das Detail Z aus Fig. 1;
- Fig. 4:: einen Querschnitt entlang der Schnittebene A-A des in Fig. 1 dargestellten Kopfelements;
- Fig. 5:: das Detail Y aus Fig. 4;
- Fig. 6:: eine Draufsicht auf ein Halteelement für ein Kopfelement gemäß Fig. 1;
- Fig. 7:: eine dreidimensionale Ansicht des Halteelements gemäß Fig. 6;
- Fig. 8:: eine Explosionsdarstellung des Kopfelements gemäß Fig. 1, des Halteelements gemäß Fig. 6 sowie weiterer Lagerelemente;
- Fig. 9:: einen Längsschnitt durch die teilweise montierten Elemente gemäß Fig. 8; und
- Fig. 10:: eine längsgeschnittene Ansicht einer erfindungsgemäßen Förderrolle.

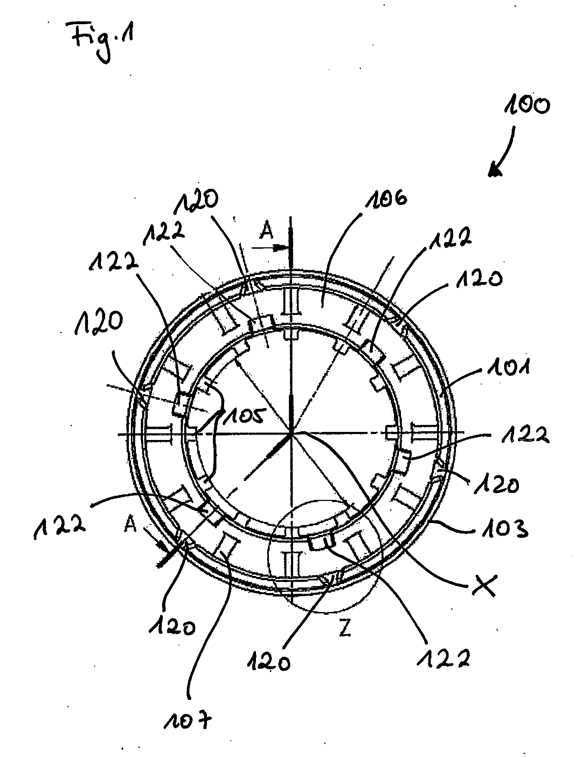

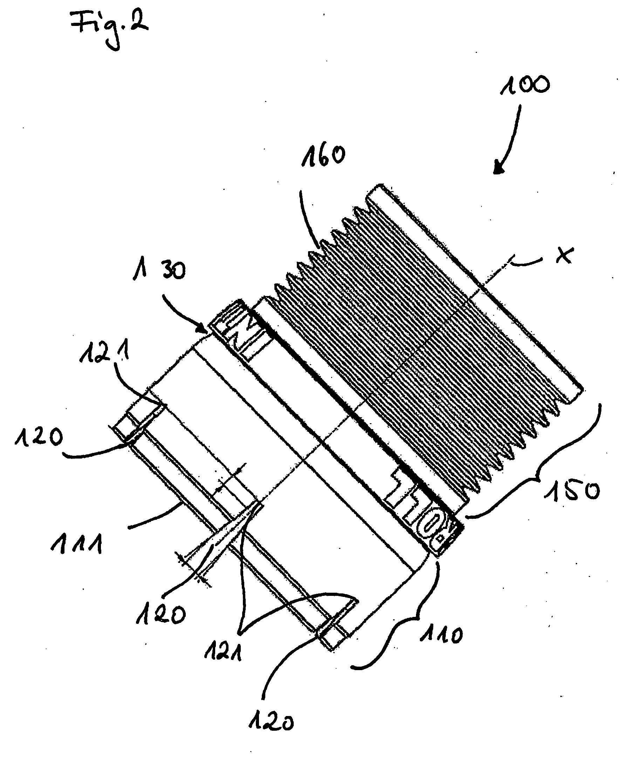

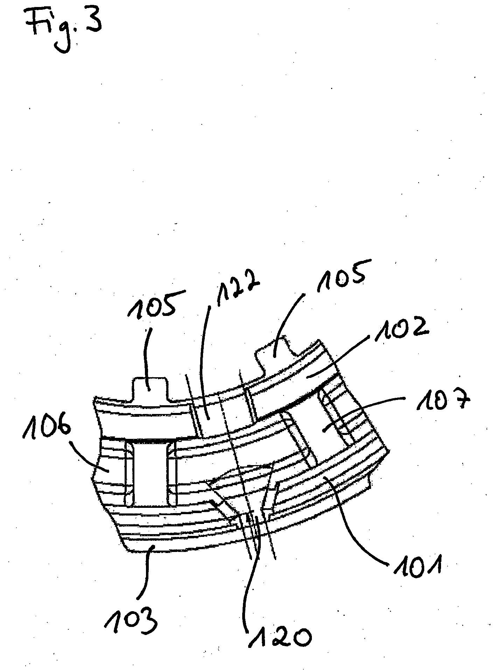

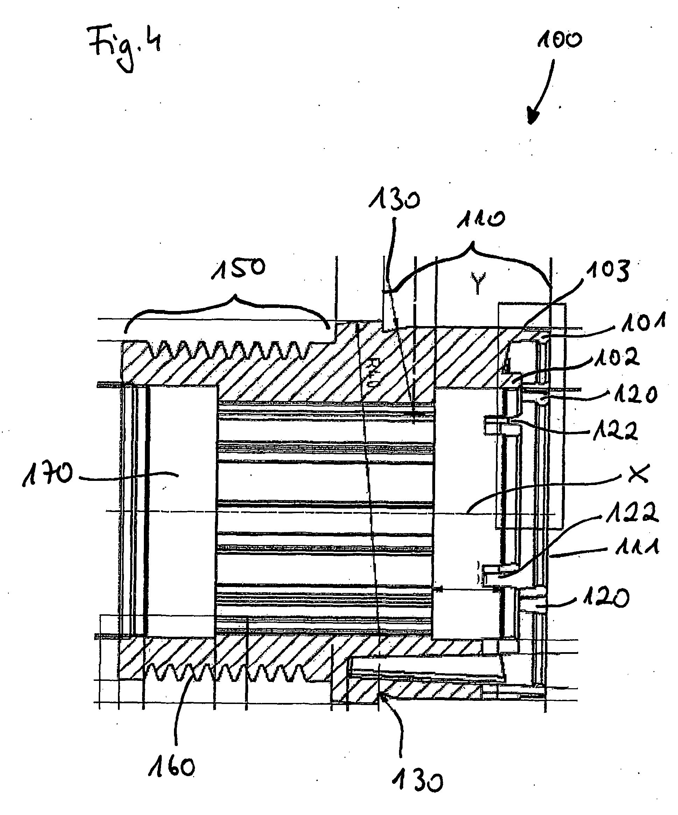

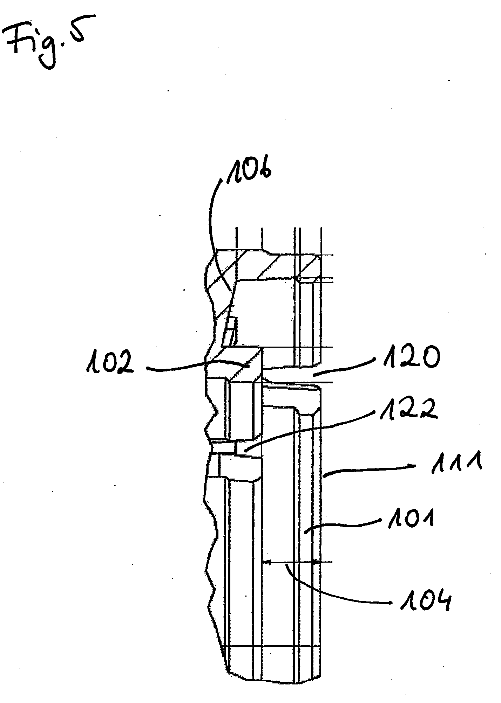

Das in den Figuren 1 bis 5 dargestellte Kopfelement 100 weist einen Einführungsabschnitt 110 zum Einführen in ein hohles Ende eines Rollenkörpers (nicht dargestellt) auf. Das Kopfelement 100 weist vorzugsweise Kunststoff auf oder besteht aus Kunststoff. Der äußere zylindrische Umfang des Einführabschnitts 110 des Kopfelements 100 ist vorzugsweise gleich oder geringfügig größer ausgebildet als der Innenumfang des hohlen Endes des Rollenkörpers, sodass beim Einstecken des Einführungsabschnitts 110 in das hohle Ende des Rollenkörpers ein Reibschluss entsteht.

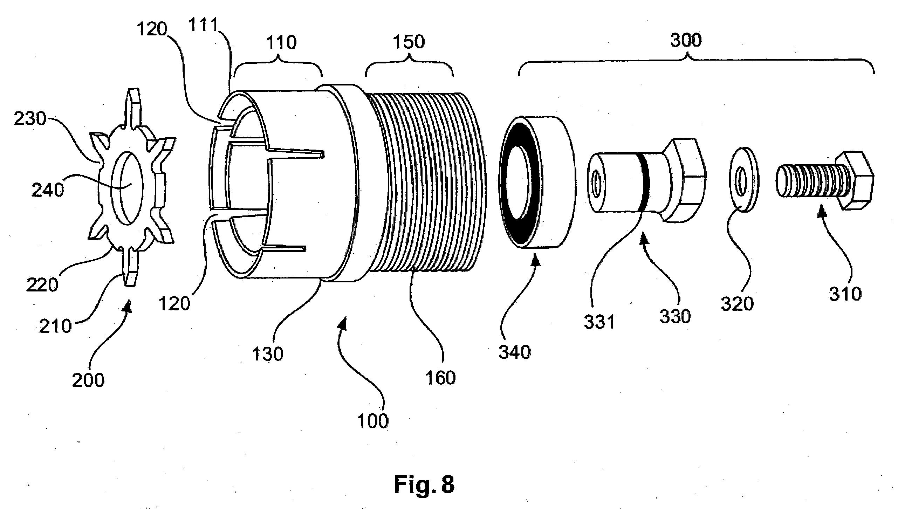

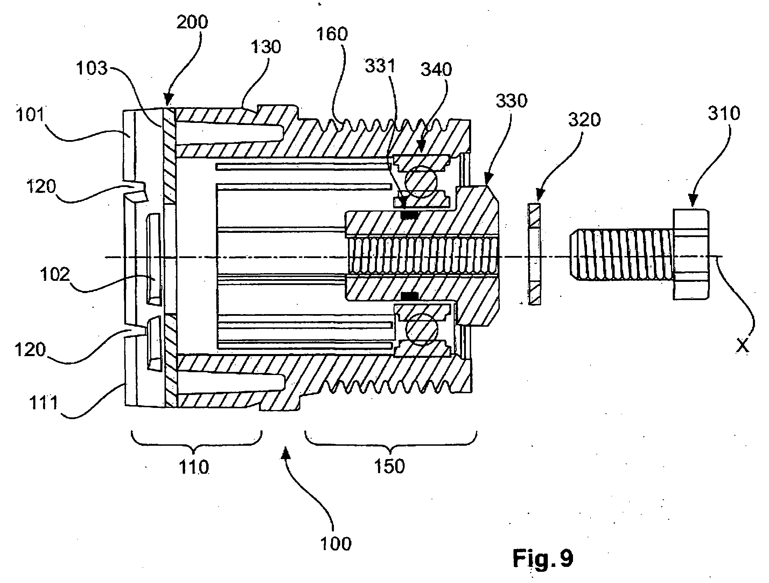

Das Kopfelement 100 weist einen inneren Hohlraum 170 auf, der ausgebildet ist, die in Figur 8 und 9 dargestellten Lagerelemente 300 zur drehbaren Lagerung des Kopfelements aufzunehmen. Die Lagerelemente 300 umfassen eine Wälzlagerung 340 für die Lagerung eines Lagerzapfens. Der Lagerzapfen wird gebildet durch eine mit einem Innengewinde versehene Hülse 330 mit einem O-Ring 331, die am Innenring des Wälzlagers 340 gelagert ist und eine Schraube 310, welche in dieses Innengewinde eingeschraubt werden kann. Zwischen der Hülse 330 und der Schraube 310 ist eine Unterlegscheibe 320 angeordnet. Über diese Wälzlagerung 300 kann die Förderrolle über das Kopfelement 100 an einem Gestell drehbar gelagert werden. An einem axialen Abschnitt des Innenumfangs des inneren Hohlraums 170 sind Rippen 105 (nur teilweise mit Bezugszeichen versehen) angeordnet.

Die Förderrolle kann grundsätzlich auch in anderer Weise als mittels der Hülse und der darin eingeschraubten Schraube 310 in einem Gestell montiert sein. So ist beispielsweise auch eine Ausführung vorteilhaft und vom Schutzumfang umfasst, bei welcher anstelle dessen ein gewindeloser Lagerzapfen zur Befestigung dient. Dieser Lagerzapfen kann beispielsweise an der Förderrolle befestigt sein, insbesondere in Längsrichtung der Rolle axial verschieblich und nach außen federvorgespannt sein, um eine einfache und schnelle Montage der Förderrolle zu bewerkstellligen. In entsprechender Weise kann auch auf der anderen Seite der Förderrolle eine andere konstruktive Ausführung vorgesehen sein, insbesondere ein Lagerzapfen mit einer nicht zylindrischen Umfangsfläche, beispielsweise einem Vier- oder Sechskant, zur drehmomentfesten Montage der Förderrolle in einer entsprechend nicht-zylindrischen Öffnung im Gestell.

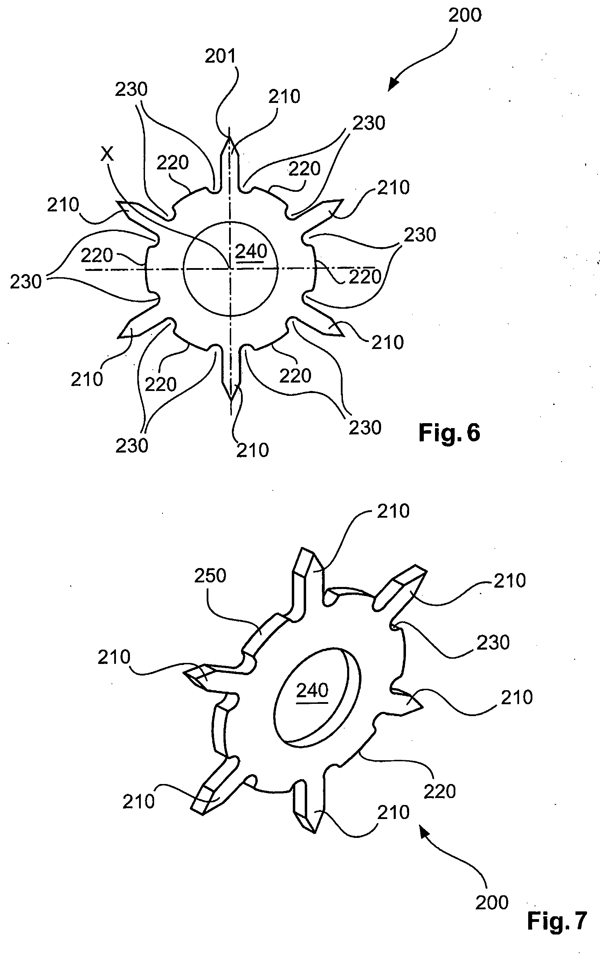

Der Einführabschnitt 110 weist in einer Ebene orthogonal zur Rollenachse X einen zylindrischen Querschnitt auf sowie über seinen Umfang verteilte Schlitze 120. Die Schlitze 120 sind gleichmäßig über den Umfang des Einführabschnitts 110 verteilt und erstrecken sich parallel zur Rollenachse X. Die Schlitze 120 verjüngen sich von einem Ende des Einführabschnitts 110 in Richtung des Übertragungsabschnitts 150 und enden noch innerhalb des Einführabschnitts 110. Die Schlitze 120 verjüngen sich vom Ende 111 des Einführabschnitts 110 hin zum Übertragungsabschnitt 150 und enden im Einführabschnitt 110. Die Enden 121 der Schlitze 120 dienen als Anschlag für ein mit Bezug auf die Figuren 6 und 7 näher dargestelltes Halteelement.

Das Köpfelement 100 weist an seinem Außenumfang im Bereich des Einführabschnitts 110 eine Außenwandverstärkung in Form eines Vorsprungs 103 auf.

Der Einführabschnitt 110 verjüngt sich an seinem dem Übertragungsabschnitt 150 zugewandten Ende 130 hin. Bis zu diesem Ende 130 wird der Einführungsabschnitt 110 in das hohle Ende eines Rollenkörpers eingeführt. Vorzugsweise wird dann das Ende des Rollenkörpers im Bereich 130 des Kopfelements 100 umgebördelt, um die drehmomentsteife Verbindung zwischen Einführabschnitt 110 und Rollenkörper zu verbessern.

Zwischen den Schlitzen 120 befindet sich am Ende 111 des Einführabschnitts 110 ein erster Ringwulst 101 sowie axial in Richtung zum Übertragungsabschnitt 150 hin im Abstand 104 beabstandet ein weiterer Ringwulst 102, der einen kleineren radialen Abstand zur Rollenachse X aufweist als der erste Ringwulst 101. Der Ringwulst 102 weist Einkerbungen 122 auf, die in ihrer radialen Ausrichtung auf die Verteilung der Schlitze 120 ausgerichtet sind, was insbesondere vorteilhaft ist, wenn die axiale Erstreckung der Schlitze 120 vom Ende 111 des Einführabschnitts 110 bis zum Ende der Schlitze 121 länger ist als der Abstand 104 zwischen erstem Ringwulst 101 und zweitem Ringwulst 102. Eine sich in radialer Richtung schräg nach außen erstreckende ringförmige Fläche 106 zwischen dem ersten Ringwulst 101 und zweitem Ringwulst 102 weist Vertiefungen 107 (nur teilweise mit Bezugszeichen versehen) auf. Diese Ausgestaltung des Kopfelements 100, insbesondere des Einführabschnitts 110, dient dazu, die Stabilität des Kopfelements 100 zu erhöhen und über das Halteelement auf das Kopfelement übertragene Kräfte aufzunehmen.

Im innenliegenden Endbereich des Kopfelementes kann ein zweites Lager aufgenommen werden, was insbesondere dann erforderlich ist, wenn eine nicht kippstabile Befestigung des Lagerzapfens im Gestell vorgesehen ist, beispielsweise bei einem federbeaufschlagten, axial verschieblichen Zapfen zur leichteren und schnellen Montage der Förderrolle, wie dem zuvor beschrieben Sechskantzapfen. In diesem Fall kann durch die Einkerbungen 122 ein Radiallwälzlager im Kopfelement mittels einer Schnappverbindung formschlüssig am Außenring des Lagers axial gesichert werden und eine zweite radiale Abstützung des Lagerzapfens im Kopfelement der Förderrolle bewirken, um diesen kippstabil in der Förderrolle zu lagern.

Das Kopfelement 100 weist ferner einen Übertragungsabschnitt 150 auf zur Übertragung der Rotation des Rollenkörpers an eine oder mehrere weitere Rollen. Der Übertragungsabschnitt 150 weist dazu an seinem Außenumfang ein Mehrfach-V-Profil 160 auf, das einen oder mehrere Poly-V-Riemen (nicht dargestellt) aufnehmen kann.

Ein Halteelement für das in den Figuren 1 bis 5 dargestellte Kopfelement 100 ist in den Figuren 6 und 7 dargestellt. Das Halteelement 200 ist scheibenförmig ausgebildet mit einer axialen Erstreckung 250 in Richtung der Rollenachse X, die wesentlich geringer ist als die Erstreckung des Halteelements 200 in einer zu der Rollenachse X orthogonalen Ebene. Das Halteelement 200 ist sternförmig ausgebildet mit mehreren Umfangsspitzen 210 und einer inneren, kreisrunden Ausnehmung 240. Zwischen den Umfangsspitzen 210 sind über den Umfang des Halteelements 200 mehrere abgeflachte Segmente 220 ausgebildet, die über konkave Rundungen 230 mit den Umfangsspitzen 210 verbunden sind. In den Figuren 7 und 8 sind jeweils nur ein abgeflachtes Segment 220 und eine konkave Rundung 230 mit Bezugszeichen versehen, in Figur 8 auch nur eine Umfangsspitze 210.

Wie in den Figuren 8 und 9 zu erkennen ist, wird das Halteelement 200 so in den Einführabschnitt 110 des Kopfelements 100 eingeschoben, dass die Umfangsspitzen 210 durch die Schlitze 120 nach außen über den Außenumfang des Einführabschnitts 110 hinausragen. In Fig. 9 ist das Halteelement 200 bis an die Enden der Schlitze 120 eingeschoben abgebildet, jedoch sind der in Fig. 9 gezeigten Abbildung keine über den Außenumfang des Einführabschnitts 110 hinausragenden Umfangsspitzen zu erkennen.

Der Abstand zwischen dem in einer bestimmten radialen Richtung (hier in einer senkrecht nach oben weisenden Richtung) liegenden Punkt 202 am Umfang des Halteelements 200 und der Rollenachse X ist größer als ein Abstand zwischen der Rollenachse X und einem Punkt am Innenumfang des hohlen Endes des Rollenkörpers. Auf diese Weise muss beim Einführen des Einführabschnitts 110 des Kopfelements 100 mit dem Halteelement 200 in das hohle Ende des Rollenkörpers eine Anpassung zwischen den Umfangsspitzen 210 des Halteelements 200 und der Innenfläche des Rollenkörpers erfolgen. Durch diese Anpassung wird eine Relativbewegung zwischen dem Kopfelement 100 und dem Rollenkörper auch bei hohen Drehmomenten zuverlässig verhindert.

Das Halteelement 200 ist vorzugsweise aus Metall ausgebildet und zwar aus einem Metall, das härter ist als das Material des Rollenkörpers, insbesondere das Material an der Innenfläche des hohlen Endes des Rollenkörpers. Auf diese Weise graben sich die Umfangsspitzen 210 des Halteelements 200 beim Einführen oder Einstecken des Einführungsabschnitts 110 des Kopfelements 100 in das hohle Ende des Rollenkörpers in die Innenfläche des Rollenkörpers ein, sodass eine besonders zuverlässige drehmomentsteife Verbindung zwischen Kopfelement 100 und dem Rollenkörper entsteht.

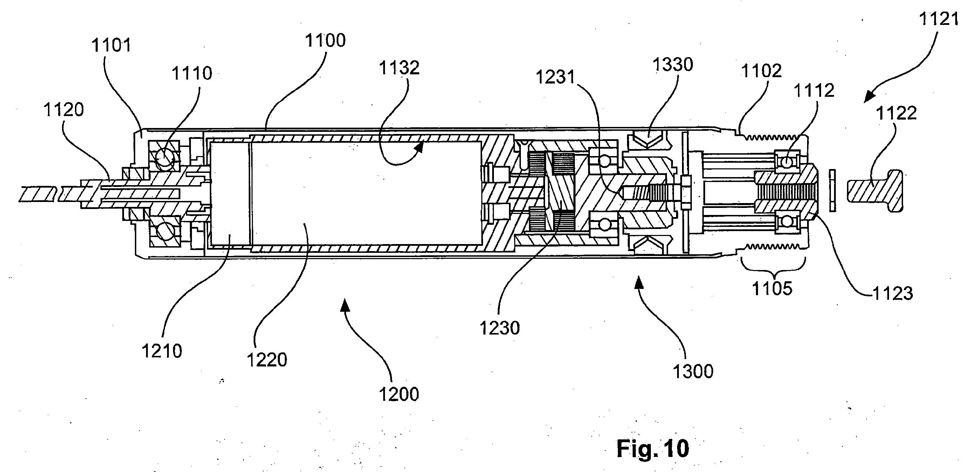

Figur 10 zeigt den grundsätzlichen Aufbau einer Förderrolle nach der Erfindung, die hier als motorbetriebene Förderrolle ausgebildet ist. In einem Rollenkörper 1100 ist an einem ersten Ende eine mit dem Rollenkörper fest verbundene Endkappe 1101 eingesetzt, innerhalb der ein Wälzlager 1110 angeordnet ist. Das Wälzlager 1110 dient zur drehbaren Lagerung eines Lagerzapfens 1120. Der Lagerzapfen 1120 ist an einem nach außen weisenden Ende mit einem Außengewinde versehen, auf dem eine Mutter aufgeschraubt ist und mit Hilfe derer der Lagerzapfen drehmomentfest in einer Öffnung eines Gestells befestigt werden kann, in dem das Gestell zwischen der Mutter und einer auf dem Gewinde einwärts von der Mutter festgesetzten Hülse geklemmt wird.

Der Rollenkörper 1100 weist eine innere Umfangsfläche 1132 auf, die einen Innenraum in dem Rollenkörper nach radial begrenzt.

Der Lagerzapfen 1120 ist hohl ausgeführt und durch die Innenbohrung des Lagerzapfens 1120 werden Versorgungs- und Steuerleitungen zu einer Antriebseinheit 1200 geleitet. Die Antriebseinheit 1200 ist innerhalb des Rollenkörpers 1100 angeordnet und drehmomentfest mit dem Lagerzapfen 1120 verbunden. Die Antriebseinheit 1200 weist an ihrem zum Lagerzapfen1 120 weisenden Ende eine Steuerungselektronik 1210 zur Ansteuerung eines elektrischen Antriebsmotors 1220 auf, der vorzugsweise als bürstenloser, dreiphasiger Gleichstrommotor mit Innenläufern ausgeführt ist. Der Antriebsmotor 1220 ist zwischen der Steuerungselektronik 1210 und einem Planetengetriebe 1230 der Antriebseinheit 1200 angeordnet, welches an dem von dem Lagerzapfen 1120 wegweisenden Ende der Antriebseinheit angeordnet ist.

Das Planetengetriebe 1230 weist eine mit einem Sechskantquerschnitt ausgeführte Abtriebswelle 1231 auf, die formschlüssig mit einer Kupplungseinheit 1300 drehmomentfest verbunden ist. Die Kupplungseinheit 1300 ist mittels eines Anpressringes 1330 reibschlüssig an der Innenwand des Rollenkörpers festgesetzt und überträgt das Drehmoment der Antriebseinheit und die Rotation der Abtriebswelle auf den Rollenkörper. Der Rollenkörper dreht sich in Folge dessen mit dem Antriebsdrehmoment relativ zu dem Lagerzapfen und der Antriebseinheit 1200.

An dem Lagerzapfen 1120 gegenüberliegenden Ende des Rollenkörpers ist ein Kopfstück 1102 drehmomentfest in den Rollenkörper eingesetzt. Dieses Kopfstück trägt mehrere W-förmige Umfangsnuten 1105, mittels derer die Rotation und das Drehmoment der Förderrolle auf benachbarte Leerlaufrollen übertragen werden kann. Innerhalb des Kopfstücks 1102 ist wiederum eine Wälzlagerung 1112 für die Lagerung eines endseitigen Lagerzapfens 1121 angeordnet. Der Lagerzapfen 1121 wird gebildet durch eine mit einem Innengewinde versehene Hülse 1123, die am Innenring des Wälzlagers 1112 gelagert ist und eine Schraube 1122, welche in dieses Innengewinde eingeschraubt werden kann, um die Förderrolle auch an diesem Ende an einem Gestell befestigen zu können.

## Patentansprüche

1. Förderrolle für Förderanlagen zum Fördern von Behältern, Paletten und dergleichen, umfassend
- einen Rollenkörper mit einer Rollenachse, dessen Außenumfangsfläche eine Auflagefläche für Fördergut darstellt, und
- ein Kopfelement (100), das mit einem Einführabschnitt (110) in ein hohles Ende des Rollenkörpers eingeführt ist,
wobei an dem Einführabschnitt (110) ein Halteelement (200) angeordnet ist, das an seinem Außenumfang mindestens einen Punkt (201) aufweist, der in einer radialen Richtung einen Abstand zu der Rollenachse (X) aufweist, der größer ist als ein Abstand zwischen der Rollenachse (X) und einem Punkt an einem Innenumfang des hohlen Endes des Rollenkörpers in der gleichen radialen Richtung,
**dadurch gekennzeichnet, dass** der Einführabschnitt (110) über seinen Umfang verteilte Schlitze (120) aufweist und das Halteelement (200) Umfangsspitzen (210) aufweist, die durch die Schlitze (120) radial nach außen ragen.

2. Förderrolle nach dem vorhergehenden Anspruch, **gekennzeichnet durch** eine Antriebseinheit, die ausgebildet und angeordnet ist, ein Drehmoment auf den Rollenkörper zu übertragen.

3. Förderrolle nach einem der beiden vorhergehenden Ansprüche,
**dadurch gekennzeichnet, dass** der Einführabschnitt (110) und das Ende des Rollenkörpers jeweils einen zylindrischen Querschnitt aufweisen.

4. Förderrolle nach einem der vorhergehenden Ansprüche,
**dadurch gekennzeichnet, dass** das Kopfelement (100) einen Übertragungsabschnitt (150) zum Übertragen eines Drehmoments an ein Übertragungselement aufweist.

5. Förderrolle nach dem vorhergehenden Anspruch,
**dadurch gekennzeichnet, dass** der Übertragungsabschnitt (150) außenumfänglich Umfangsprofil mit einer Doppel-W-Form aufweist, um zwei Poly-V-Riemen aufzunehmen.

6. Förderrolle nach einem der beiden vorhergehenden Ansprüche,
**dadurch gekennzeichnet, dass** der Übertragungsabschnitt (150) außenumfänglich ein Mehrfach-V-Umfangsprofil (160) aufweist, um einen oder mehrere Poly-V-Riemen aufzunehmen.

7. Förderrolle nach einem der vorhergehenden Ansprüche,
**dadurch gekennzeichnet, dass** das Halteelement (200) scheibenförmig ausgebildet ist.

8. Förderrolle nach einem der vorhergehenden Ansprüche,
**dadurch gekennzeichnet, dass** das Halteelement (200) sternförmig ausgebildet ist.

9. Förderrolle nach einem der vorhergehenden Ansprüche,
**dadurch gekennzeichnet, dass** das Halteelement (200) ein erstes Material aufweist oder daraus besteht und der Rollenkörper ein zweites Material aufweist oder daraus besteht und das erste Material härter ist als das zweite Material, wobei vorzugsweise das Kopfelement (100) ein drittes Material aufweist oder daraus besteht und das erste Material härter ist als das dritte Material.

10. Förderrolle nach einem der vorhergehenden Ansprüche,
**dadurch gekennzeichnet, dass** sich die Schlitze (120) von einem Ende (111) des Einführabschnitts (110) in Richtung des Übertragungsabschnitts (150) erstrecken und im Einführabschnitt (110) enden.

11. Förderrolle nach einem der vorhergehenden Ansprüche,
**dadurch gekennzeichnet, dass** sich die Schlitze zum Übertragungsabschnitt hin verjüngen.

12. Förderrolle nach einem der vorhergehenden Ansprüche,
**dadurch gekennzeichnet, dass** sich der Einführabschnitt (110) an seinem dem Übertragungsabschnitt (150) zugewandten Ende hin verjüngt.

13. Förderrolle nach dem vorhergehenden Anspruch,
**dadurch gekennzeichnet, dass** das Ende des Rollenkörpers im Bereich des verjüngten Ende des Einführabschnitts (110) eine Bördelung aufweist.

14. Verfahren zur Herstellung einer Förderrolle für Förderanlagen zum Fördern von Behältern, Paletten und dergleichen, insbesondere einer Förderrolle nach einem der vorhergehenden Ansprüche,
umfassend die Schritte:
- Bereitstellen eines Rollenkörpers mit einer Rollenachse, dessen Außenumfangsfläche eine Auflagefläche für Fördergut darstellt,
- Bereitstellen eines Kopfelements (100) mit einem Einführabschnitt (110) zum Einführen in ein hohles Ende des Rollenkörpers,
- Anordnen eines Halteelements (200) an dem Einführabschnitt (110), wobei das Halteelement (200) an seinem Außenumfang mindestens einen Punkt (201) aufweist, der in einer radialen Richtung einen Abstand zu der Rollenachse (X) aufweist, der größer ist als ein Abstand zwischen der Rollenachse (X) und einem Punkt an einem Innenumfang des hohlen Endes des Rollenkörpers in der gleichen radialen Richtung, und wobei der Einführabschnitt (110) über seinen Umfang verteilte Schlitze (120) aufweist und das Halteelement (200) Umfangsspitzen (210) aufweist, die durch die Schlitze (120) radial nach außen ragen,
- Einführen des Einführabschnitts (110) des Kopfelements (100) mit dem Halteelement (200) in das hohle Ende des Rollenkörpers.

## Claims

1. Conveyor roller for conveyor systems for conveying containers, pallets and such like, comprising
- a roller body having a roller axis, the external circumferential surface of which constitutes a support surface for conveyed items, and
- a head element (100) which is inserted by means of an insertion portion (110) in a hollow end of the roller body,
a retaining element (200) being provided on the insertion portion (110) which has at least one point (201) on its external circumference that is disposed at a distance from the roller axis (X) in a radial direction that is greater than a distance between the roller axis (X) and a point on an internal circumference of the hollow end of the roller body in the same radial direction, **characterised in that** the insertion portion (110) has slots (120) distributed around its circumference and the retaining element (200) has circumferential tips (210) which project radially outwards through the slots (120).

2. Conveyor roller as claimed in the preceding claim, **characterised by** a drive unit which is configured and disposed so as to transmit a torque to the roller body.

3. Conveyor roller as claimed in one of the two preceding claims, **characterised in that** the insertion portion (110) and the end of the roller body each have a cylindrical cross-section.

4. Conveyor roller as claimed in one of the preceding claims,
**characterised in that** the head element (100) has a transmission portion (150) for transmitting a torque to a transmission element.

5. Conveyor roller as claimed in the preceding claim,
**characterised in that** externally, the transmission portion (150) has a circumferential profile with a double-W shape in order to receive two poly-V-belts.

6. Conveyor roller as claimed in one of the two preceding claims,
**characterised in that** externally, the transmission portion (150) has a multiple V-shaped circumferential profile (160) in order to receive one or more poly-V-belts.

7. Conveyor roller as claimed in one of the preceding claims,
**characterised in that** the retaining element (200) is of a disc-shaped design.

8. Conveyor roller as claimed in one of the preceding claims,
**characterised in that** the retaining element (200) is of a star-shaped design.

9. Conveyor roller as claimed in one of the preceding claims,
**characterised in that** the retaining element (200) comprises or consists of a first material and the roller body comprises or consists of a second material, and the first material is harder than the second material, and the head element (100) preferably comprises or consists of a third material, and the first material is harder than the third material.

10. Conveyor roller as claimed in one of the preceding claims,
**characterised in that** the slots (120) extend from one end (111) of the insertion portion (110) in the direction of the transmission portion (150) and terminate in the insertion portion (110).

11. Conveyor roller as claimed in one of the preceding claims,
**characterised in that** the slots taper towards the transmission portion.

12. Conveyor roller as claimed in one of the preceding claims,
**characterised in that** the insertion portion (110) tapers at its end facing the transmission portion (150).

13. Conveyor roller as claimed in the preceding claim,
**characterised in that** the end of the roller body has a flange in the region of the tapered end of the insertion portion (110).

14. Method of producing a conveyor roller for conveyor systems for conveying containers, pallets and such like, in particular a conveyor roller as claimed in one of the preceding claims,
comprising the steps:
- providing a roller body having a roller axis, the external circumferential surface of which constitutes a support surface for conveyed items,
- providing a head element (100) with an insertion portion (110) for inserting in a hollow end of the roller body,
- placing a retaining element (200) on the insertion portion (110), which retaining element (200) has at least one point (201) on its external circumference that is disposed at a distance from the roller axis (X) in a radial direction that is greater than a distance between the roller axis (X) and a point on an internal circumference of the hollow end of the roller body in the same radial direction, and the insertion portion (110) has slots (120) distributed around its circumference and the retaining element (200) has circumferential tips (210) which project radially outwards through the slots (120),
- inserting the insertion portion (110) of the head element (100) with the retaining element (200) in the hollow end of the roller body.

## Revendications

1. Rouleau de transport pour des installations de transport servant au transport de récipients, palettes et similaires, comprenant
- un corps de rouleau avec un axe de rouleau, dont la surface périphérique extérieure constitue une surface d'appui pour des produits à transporter, et
- un élément de tête (100) qui est introduit avec une section d'introduction (110) dans une extrémité creuse du corps de rouleau,
dans lequel un élément de retenue (200) est agencé sur la section d'introduction (110), lequel élément présente sur sa périphérie extérieure au moins un point (201) qui présente dans un sens radial une distance par rapport à l'axe de rouleau (X) qui est supérieure à une distance entre l'axe de rouleau (X) et un point sur une périphérie intérieure de l'extrémité creuse du corps de rouleau dans le même sens radial, **caractérisé en ce que** la section d'introduction (110) présente des fentes (120) réparties sur sa périphérie et l'élément de retenue (200) présente des pointes périphériques (210) qui dépassent radialement vers l'extérieur au travers des fentes (120).

2. Rouleau de transport selon la revendication précédente, **caractérisé par** une unité d'entraînement qui est réalisée et agencée afin de transmettre un couple au corps de rouleau.

3. Rouleau de transport selon l'une quelconque des deux revendications précédentes, **caractérisé en ce que** la section d'introduction (110) et l'extrémité du corps de rouleau présentent chacune une section cylindrique.

4. Rouleau de transport selon l'une quelconque des revendications précédentes, **caractérisé en ce que** l'élément de tête (100) présente une section de transmission (150) pour la transmission d'un couple à un élément de transmission.

5. Rouleau de transport selon la revendication précédente, **caractérisé en ce que** la section de transmission (150) présente sur sa périphérie extérieure un profil périphérique avec une forme de double W afin de recevoir deux courroies Poly-V.

6. Rouleau de transport selon l'une quelconque des deux revendications précédentes, **caractérisé en ce que** la section de transmission (150) présente sur la périphérie extérieure un profil périphérique en V multiple (160) afin de recevoir une ou plusieurs courroies Poly-V.

7. Rouleau de transport selon l'une quelconque des revendications précédentes, **caractérisé en ce que** l'élément de retenue (200) est réalisé en forme de disque.

8. Rouleau de transport selon l'une quelconque des revendications précédentes, **caractérisé en ce que** l'élément de retenue (200) est réalisé en forme d'étoile.

9. Rouleau de transport selon l'une quelconque des revendications précédentes, **caractérisé en ce que** l'élément de retenue (200) présente un premier matériau ou se compose de celui-ci et le corps de rouleau présente un deuxième matériau ou se compose de celui-ci et le premier matériau est plus dur que le deuxième matériau, dans lequel l'élément de tête (100) présente de préférence un troisième matériau ou se compose de celui-ci et le premier matériau est plus dur que le troisième matériau.

10. Rouleau de transport selon l'une quelconque des revendications précédentes, **caractérisé en ce que** les fentes (120) s'étendent d'une extrémité (111) de la section d'introduction (110) en direction de la section de transmission (150) et se terminent dans la section d'introduction (110).

11. Rouleau de transport selon l'une quelconque des revendications précédentes, **caractérisé en ce que** les fentes se rétrécissent vers la section de transmission.

12. Rouleau de transport selon l'une quelconque des revendications précédentes, **caractérisé en ce que** la section d'introduction (110) se rétrécit sur son extrémité tournée vers la section de transmission (150).

13. Rouleau de transport selon la revendication précédente, **caractérisé en ce que** l'extrémité du corps de rouleau présente un bord rabattu dans la zone de l'extrémité rétrécie de la section d'introduction (110).

14. Procédé de fabrication d'un rouleau de transport pour des installations de transport servant au transport de récipients, palettes et similaires, en particulier d'un rouleau de transport selon l'une quelconque des revendications précédentes, comprenant les étapes de :
- mise à disposition d'un corps de rouleau avec un axe de rouleau, dont la surface périphérique extérieure constitue une surface d'appui pour des produits à transporter,
- mise à disposition d'un élément de tête (100) avec une section d'introduction (110) pour l'introduction dans une extrémité creuse du corps de rouleau,
- agencement d'un élément de retenue (200) sur la section d'introduction (110), dans lequel l'élément de retenue (200) présente sur sa périphérie extérieure au moins un point (201) qui présente dans un sens radial une distance par rapport à l'axe de rouleau (X) qui est supérieure à une distance entre l'axe de rouleau (X) et un point sur une périphérie intérieure de l'extrémité creuse du corps de rouleau dans le même sens radial, et dans lequel la section d'introduction (110) présente des fentes (120) réparties sur sa périphérie et l'élément de retenue (200) présente des pointes périphériques (210) qui dépassent radialement vers l'extérieur par les fentes (120),
- introduction de la section d'introduction (110) de l'élément de tête (100) avec l'élément de retenue (200) dans l'extrémité creuse du corps de rouleau.
